# EUROPEAN PATENT APPLICATION

(11) **EP 4 391 632 A1**
(43) Date of publication of application: **26.06.2024**
(21) Application number: 21953646.3
(22) Date of filing: 16.08.2021
(51) Int. Cl.: H04W 24/08

(54) **TERMINAL CAPABILITY REPORT METHOD AND DEVICE AND STORAGE MEDIUM**

(71) Applicant: Beijing Xiaomi Mobile Software Co., Ltd., Beijing 100085 (CN)
(72) Inventor: TAO, Xuhua, Beijing 100085 (CN)
(74) Representative: Stöckeler, Ferdinand
(86) International application number: PCT/CN2021/112741
(87) International publication number: WO 2023/019392

(57) **Abstract**

A terminal capability report method and device and a storage medium. The terminal capability report method comprises: reporting terminal capability information to a base station, the terminal capability information being used for indicating the maximum number of measurement gaps supported by the terminal (101). The maximum number of measurement gaps supported by the terminal is achieved, such that the flexibility of network configuration is improved, a subsequent terminal can perform mobility measurement or positioning measurement on different measurement objects on the basis of a measurement gap configured on a network side, the time delay of the mobility measurement or the positioning measurement is reduced, and the performance of the mobility measurement or the positioning measurement is improved.

## Description

### TECHNICAL FIELD

The present disclosure relates to the field of communication technologies, in particularly, to a method and an apparatus for reporting a terminal capability and a storage medium.

### BACKGROUND

In a current new radio system, a terminal supports one measurement gap at a same frequency range. Alternatively, the terminal supports one measurement gap in each of two different frequency ranges.

The measurement gap is configured for a mobility measurement or a positioning measurement, which requires alignment of time-domain offset configurations of different reference signals, and may affect a flexibility of network configuration. In addition, sharing one measurement gap by different reference signals can also cause excessive delay in the mobility measurement or the positioning measurement, affecting a performance of the mobility measurement or the positioning measurement.

### SUMMARY

To overcome the problem in related arts, embodiments of the present disclosure provide a method and an apparatus for reporting a terminal capability and a storage medium.

According to a first aspect of an embodiment of the present disclosure, there is provided a method for reporting a terminal capability, performed by a terminal. The method includes:
reporting terminal capability information to a base station, in which, the terminal capability information is configured to indicate a maximum number of measurement gaps supported by the terminal.

Optionally, the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

Optionally, reporting the terminal capability information to the base station includes:
reporting the terminal capability information to the base station through a first signaling, in which, the first signaling is a signaling for reporting a terminal mobility measurement parameter.

Optionally, the first signaling is at least one of:
a measurement and mobility parameter information unit signaling; or
a measurement and mobility parameter information unit of multi-radio access technology (RAT) dual connectivity signaling.

Optionally, after reporting the terminal capability information to the base station, the method further includes:
receiving pieces of measurement gap configuration information corresponding to measurement objects sent by the base station; and
measuring the corresponding measurement object based on a measurement gap indicated by the measurement gap configuration information.

Optionally, receiving the pieces of measurement gap configuration information corresponding to the measurement objects sent by the base station includes:
receiving one of the pieces of corresponding measurement gap configuration information configured by the base station for each of the measurement objects;
measuring the corresponding measurement obj ect based on the measurement gap indicated by the measurement gap configuration information includes:
   measuring the corresponding measurement obj ect based on the measurement gap indicated by each of the pieces of measurement gap configuration information.

Optionally, receiving the pieces of measurement gap configuration information corresponding to the measurement objects sent by the base station includes:
receiving one of the pieces of corresponding measurement gap configuration information configured by the base station for each of first measurement objects, and one piece of shared measurement gap configuration information configured for all second measurement objects, in which, a priority level of the first measurement objects is higher than a priority level of the second measurement obj ects;
measuring the corresponding measurement obj ect based on the measurement gap indicated by the measurement gap configuration information includes:
   measuring each of corresponding first measurement objects based on a measurement gap indicated by the measurement gap configuration information corresponding to each of the first measurement objects; and
   measuring each of second measurement object based on a measurement gap indicated by the measurement gap configuration information shared by all second measurement objects.

Optionally, receiving the pieces of measurement gap configuration information corresponding to the measurement objects sent by the base station includes:
receiving pieces of measurement gap configuration information corresponding to the measurement objects sent by the base station through a second signaling;
the method further includes:
   determining the first measurement objects with a priority level higher than the second measurement objects based on first measurement object configuration information comprised in the second signaling.

Optionally, the measurement objects include at least one of:
different measurement objects corresponding to a same RAT;
measurement objects corresponding to different RATs;
measurement objects based on synchronization signal blocks or channel state information reference signals; and/or
measurement objects based on positioning reference signals.

According to a second aspect of an embodiment of the present disclosure, there is provided a method for reporting a terminal capability, performed by a base station. The method includes:
receiving terminal capability information reported by a terminal, in which, the terminal capability information is configured to indicate a maximum number of measurement gaps supported by the terminal.

Optionally, the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

Optionally, reporting the terminal capability information to the base station includes:
configuring pieces of measurement gap configuration information corresponding to measurement objects for the terminal based on the terminal capability information and measurement configuration information at least configured to indicate the measurement objects; and
sending the pieces of measurement gap configuration information corresponding to the measurement objects to the terminal.

Optionally, configuring the pieces of measurement gap configuration information corresponding to the measurement objects for the terminal based on the terminal capability information and the measurement configuration information at least configured to indicate the measurement objects includes:
configuring one of the pieces of corresponding measurement gap configuration information for each of the measurement objects in response to determining that the maximum number of measurement gaps is greater than or equal to a total number of the measurement objects indicated by the measurement configuration information.

Optionally, configuring the pieces of measurement gap configuration information corresponding to the measurement objects for the terminal based on the terminal capability information and the measurement configuration information at least configured to indicate the measurement objects includes:
determining first measurement objects and second measurement objects in the measurement objects indicated by the measurement configuration information in response to determining that the maximum number of measurement gaps is less than the total number of the measurement objects indicated by the measurement configuration information, in which, a priority level of the first measurement objects is higher than a priority level of the second measurement objects; and
configuring one of the pieces of measurement gap configuration information corresponding to each of the first measurement objects, and configuring one of the pieces of measurement gap configuration information shared by all second measurement objects.

Optionally, sending the pieces of measurement gap configuration information corresponding to the measurement objects to the terminal includes:
sending the pieces of measurement gap configuration information corresponding to the measurement objects to the terminal through a second signaling.

Optionally, the second signaling comprises first measurement object configuration information, and the first measurement objects are measurement objects with a priority level higher than the second measurement objects.

Optionally, the second signaling is a measurement configuration information unit signaling.

Optionally, the measurement objects include at least one of:
different measurement objects corresponding to a same RAT;
measurement objects corresponding to different RATs;
measurement objects based on synchronization signal blocks or channel state information reference signals; and/or
measurement objects based on positioning reference signals.

According to a third aspect of an embodiment of the present disclosure, there is provided an apparatus for reporting a terminal capability, performed by a terminal. The apparatus includes:
a reporting module, configured to report terminal capability information to a base station, in which, the terminal capability information is configured to indicate a maximum number of measurement gaps supported by the terminal.

According to a fourth aspect of an embodiment of the present disclosure, there is provided an apparatus for reporting a terminal capability, performed by a base station. The apparatus includes:
a first receiving module, configured to receive terminal capability information reported by a terminal, in which, the terminal capability information is configured to indicate a maximum number of measurement gaps supported by the terminal.

According to a fifth aspect of an embodiment of the present disclosure, there is provided a computer-readable storage medium having a computer program stored thereon. The computer program is configured to perform any one of the method for reporting the terminal capability as described above at the terminal side.

According to a sixth aspect of an embodiment of the present disclosure, there is provided a computer-readable storage medium having a computer program stored thereon. The computer program is configured to perform any one of the method for reporting the terminal capability as described above at the base station side.

According to a seventh aspect of an embodiment of the present disclosure, there is provided an apparatus for reporting a terminal capability. The apparatus includes:
a processor; and
a memory, configured to store instructions executable by the processor;
in which, the processor is configured to perform any one of the method for reporting the terminal capability as described above at the terminal side.

According to an eighth aspect of an embodiment of the present disclosure, there is provided an apparatus for reporting a terminal capability. The apparatus includes:
a processor; and
a memory, configured to store instructions executable by the processor;
in which, the processor is configured to perform any one of the method for reporting the terminal capability as described above at the base station side.

The solution provided in an embodiment of the present disclosure may include the following beneficial effects.

In an embodiment of the present disclosure, the terminal may report the terminal capability information configured to indicate the maximum number of measurement gaps supported by the terminal to the base station, such that the base station can configure the corresponding measurement gap configuration information for the terminal based on the terminal capability information and the measurement configuration information, achieving purposes of reporting the supported maximum number of measurement gaps by the terminal and further improving a flexibility of network configuration. Subsequently, the terminal may perform a mobility measurement or a positioning measurement on different measurement objects based on the measurement gaps configured on the network side, reducing a delay of the mobility measurement or the positioning measurement, and improving a performance of the mobility measurement or the positioning measurement.

It should be noted that, the details above and in the following are exemplary and illustrative, and do not constitute the limitation on the present disclosure.

### BRIEF DESCRIPTION OF THE DRAWINGS

The drawings herein are incorporated into the specification and constitute a part of the specification, show embodiments in conformity with embodiments of the present disclosure, and explain the principle of the present disclosure together with the specification.
FIG. 1 is a flowchart illustrating a method for reporting a terminal capability according to an exemplary embodiment.
FIG. 2 is a flowchart illustrating another method for reporting a terminal capability according to an exemplary embodiment.
FIG. 3 is a flowchart illustrating another method for reporting a terminal capability according to an exemplary embodiment.
FIG. 4 is a flowchart illustrating another method for reporting a terminal capability according to an exemplary embodiment.
FIG. 5 is a flowchart illustrating another method for reporting a terminal capability according to an exemplary embodiment.
FIG. 6 is a flowchart illustrating another method for reporting a terminal capability according to an exemplary embodiment.
FIG. 7 is a block diagram illustrating an apparatus for reporting a terminal capability according to an exemplary embodiment.
FIG. 8 is a block diagram illustrating another apparatus for reporting a terminal capability according to an exemplary embodiment.
FIG. 9 is a schematic diagram illustrating a structure of an apparatus for reporting a terminal capability according to an exemplary embodiment of the present disclosure.
FIG. 10 is a schematic diagram illustrating a structure of another apparatus for reporting a terminal capability according to an exemplary embodiment of the present disclosure.

### DETAILED DESCRIPTION

The exemplary embodiments will be described in detail here, and examples thereof are shown in the accompanying drawings. When the following descriptions refer to the accompanying drawings, same numbers in different drawings represent same or similar elements unless otherwise indicated. The implementations described in the following exemplary embodiments do not represent all implementations consistent with the present disclosure. Rather, they are merely examples of apparatuses and methods consistent with some aspects of the disclosure as detailed in the appended claims.

The terms described in the present disclosure are only for the purpose of describing specific embodiments and are not intended to limit the present disclosure. The singular forms "a", "the" and "said" used in the disclosure and the attached claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in this disclosure to describe various information, such information shall not be limited to these terms. These terms are only used to distinguish the same category of information. For example, subject to the scope of this present disclosure, first information may also be referred to as second information, and similarly, and second information may also be referred to as first information. It depends on the context. For example, the word "if' as used herein may be interpreted as "in a case that" or "when" or "in response to determining".

A 3GPP (3rd generation partnership project) has performed an enhanced research on a measurement gap of a NR system, introducing a solution of a terminal supporting a plurality of measurement gaps. However, the network cannot currently determine a specific number of measurement gaps supported by the terminal, and therefore cannot configure more appropriate measurement gap configuration information for the terminal. To solve the problem, the present disclosure provides the following solution of reporting a terminal capability.

The following introduces a method for reporting a terminal capability provided in the present disclosure first from a terminal side.

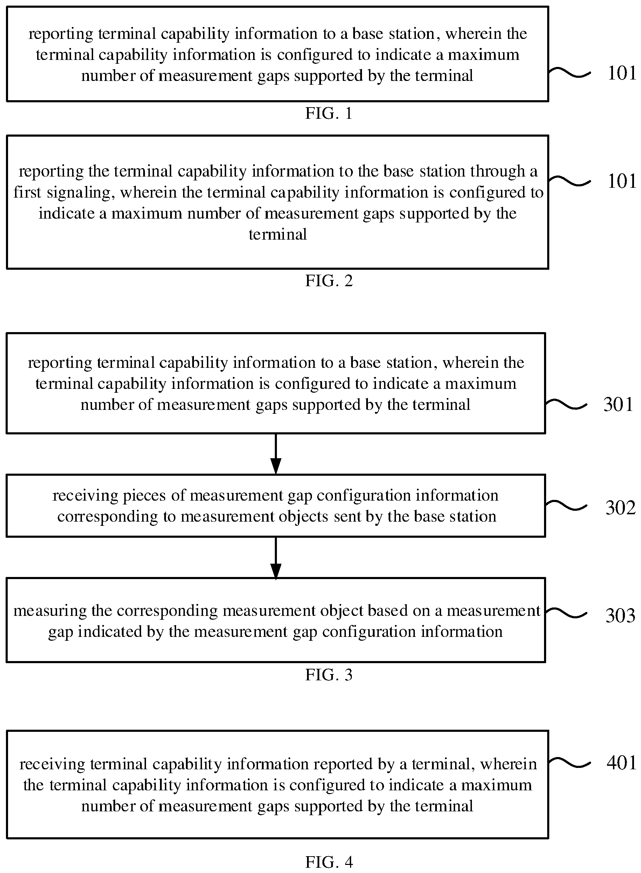

A method for reporting a terminal capability is provided in an embodiment of the present disclosure. Referring to FIG. 1, FIG. 1 is a flowchart illustrating a method for reporting a terminal capability according to an embodiment. The method may be performed by a terminal. The method may include the following step.

At step 101, terminal capability information is reported to a base station. The terminal capability information is configured to indicate a maximum number of measurement gaps supported by the terminal.

In an embodiment of the present disclosure, the measurement gap refers to a time gap during which the terminal pauses communication with a serving cell to measure neighboring cells. The maximum number of measurement gaps is a maximum number of measurement gaps supported by the terminal, which may be a positive integer greater than or equal to 1.

In a possible implementation, if the terminal previously supported one measurement gap in a same frequency range (FR), then in an embodiment of the present disclosure, the terminal capability information reported by the terminal may be specifically configured to indicate the maximum number of measurement gaps supported by the terminal at a same frequency. In another possible implementation, if the terminal previously supported one measurement interval at each of two different FRs, then in an embodiment of the present disclosure, the terminal capability information reported by the terminal can be specifically configured to indicate the maximum number of measurement gaps supported by the terminal in each of a first frequency range and a second frequency range. For example, the terminal capability information is configured to indicate that a maximum number of measurement gaps supported under FR1 is X1, and a maximum number of measurement gaps supported under FR2 is X2. X1 and X2 can be the same or different, and the present disclosure is not limited to this. In the foregoing embodiments, the method may achieve purposes of reporting the supported maximum number of measurement gaps by the terminal and further improving a flexibility of network configuration, which may have a high availability.

In some optional embodiments, referring to FIG. 2, FIG. 2 is a flowchart illustrating a method for reporting a terminal capability according to an embodiment. The method may be performed by a terminal. The method may include the following step.

At step 201, the terminal capability information is reported to the base station through a first signaling. The terminal capability information is configured to indicate a maximum number of measurement gaps supported by the terminal.

In an embodiment of the present disclosure, the first signaling may be a signaling for reporting a terminal mobility measurement parameter. The first signaling adopts, but is not limited to, a RRC (radio resource control) signaling.

In a possible implementation, the first signaling may be an IEMeasAndMobParameters (a measurement and mobility parameter information unit) signaling.

In another possible implementation, the first signaling may be an IEMeasAndMobParametersMRDC (a measurement and mobility parameter information unit of multi-radio access technology (RAT) dual connectivity) signaling.

In the above embodiment, the terminal may report the terminal capability information configured to indicate the supported maximum number of measurement gaps to the based station through the first signaling, which may achieve purposes of reporting the supported maximum number of measurement gaps by the terminal and further improving a flexibility of network configuration, having a high availability.

In some optional embodiments, referring to FIG. 3, FIG. 3 is a flowchart illustrating a method for reporting a terminal capability according to an embodiment. The method may be performed by a terminal. The method may include the following steps.

**At** step 301, terminal capability information is reported to a base station. The terminal capability information is configured to indicate a maximum number of measurement gaps supported by the terminal.

Optionally, the terminal capability information is configured to indicate the maximum number of measurement gaps supported by the terminal at a same frequency. In another possible implementation, the terminal capability information is configured to indicate the maximum number of measurement gaps supported by the terminal in each of a first frequency range and a second frequency range.

At step 302, receiving pieces of measurement gap configuration information corresponding to measurement objects sent by the base station.

**In** an embodiment of the present disclosure, the measurement objects include, but are limited to, at least one of: different MOs (measurement objects) corresponding to a same RAT; measurement objects corresponding to different RATs; measurement objects based on SSBs (synchronization signal blocks) or CSI-RSs (channel state information reference signals); and/or measurement objects based on PRSs (positioning reference signals).

At step 303, the corresponding measurement object is measured based on a measurement gap indicated by the measurement gap configuration information.

In an embodiment of the present disclosure, measurements include, but are not limited to a mobility measurement, a positioning measurement, etc. The mobility measurement mainly refers to performing a mobility-related measurement on a small reference signal. The positioning measurement mainly refers to performing a positioning-related measurement based on a positioning reference signal.

In a possible implementation, the base station configures one of the pieces of corresponding measurement gap configuration information for each of the measurement objects. The terminal measures the corresponding measurement object based on the measurement gap indicated by each of the pieces of measurement gap configuration information.

For example, the measurement objects include a measurement object 1 and a measurement object 2, and the measurement gap indicated by one piece of measurement gap configuration information corresponding to each of the measurement object 1 and the measurement object 2 is a measurement gap 1 and a measurement gap 2, respectively. The terminal measures the measurement object 1 based on the measurement gap 1, and measures the measurement object 2 based on the measurement gap 2.

In another possible implementation, the base station configures one of the pieces of measurement gap configuration information corresponding to each of the first measurement objects, and configures one of the pieces of measurement gap configuration information shared by all second measurement objects. A priority level of the first measurement objects is higher than a priority level of the second measurement objects. The base station has configured one piece of corresponding measurement gap configuration information for each of the first measurement objects with a high priority level, and the terminal may measure each of corresponding first measurement objects based on a measurement gap indicated by the measurement gap configuration information corresponding to each of the first measurement objects. In addition, the base station has configured one shared measurement gap configuration information for all second measurement objects with a low priority level. Therefore, the terminal may measure measuring each of the second measurement object based on a measurement gap indicated by the measurement gap configuration information shared by all second measurement obj ects.

For example, if a first measurement object with a high priority level includes a measurement object 3, a measurement gap indicated by one corresponding measurement gap configuration information is a measurement gap 1. A second measurement object with a low priority level includes a measurement object 1 and a measurement object 2, and a measurement gap indicated by one shared measurement gap configuration information is a measurement gap 2. Then, the terminal measures the measurement object 3 based on the measurement gap 1 and measures the measurement object 1 based on measures measurement gap 2, and measures the measurement object 2 based on the measurement gap 2.

In the above embodiments, the terminal may perform the mobility or positioning measurement on the corresponding measurement objects based on the pieces of measurement gap configuration information indicated by the measurement gaps sent by the base station, reducing a delay of the mobility or positioning measurement and improving a performance of the mobility or positioning measurement.

In some optional embodiments, the base station may send the pieces of measurement gap configuration information corresponding to the measurement objects to the terminal through a second signaling. Optionally, the second signaling may adopt, but is not limited to, a RRC signaling, which may specifically be an IEMeasConfig (measurement configuration information unit) signaling.

In a case where measurement objects with different priority levels need to be distinguished, the second signaling also includes first measurement object configuration information. The terminal may determine the first measurement objects with a higher priority level in the measurement objects based on the first measurement object configuration information, and determine other measurement objects as the second measurement objects with a lower priority level.

**In** the above embodiment, the terminal may determine the first measurement objects with a high priority level and the second measurement objects with a low priority level based on the first measurement object configuration information included in the second signaling sent by the base station, such that the measurement objects may be measured based on the measurement gaps indicated by the corresponding measurement gap configuration information, reducing a delay of the mobility measurement or the positioning measurement, and improving a performance of the mobility measurement or the positioning measurement.

The following introduces a method for reporting a terminal capability provided in the present disclosure from a base station side next.

A method for reporting a terminal capability is provided in an embodiment of the present disclosure. Referring to FIG. 4, FIG. 4 is a flowchart illustrating a method for reporting a terminal capability according to an embodiment. The method may be performed by a base station. The method may include the following step.

At step 401, terminal capability information reported by a terminal is received. The terminal capability information is configured to indicate a maximum number of measurement gaps supported by the terminal.

If the terminal previously supported one measurement gap in a same frequency range (FR), then in an embodiment of the present disclosure, the terminal capability information reported by the terminal may be specifically configured to indicate the maximum number of measurement gaps supported by the terminal at a same frequency. If the terminal previously supported one measurement interval at each of two different FRs, then in an embodiment of the present disclosure, the terminal capability information reported by the terminal can be specifically configured to indicate the maximum number of measurement gaps supported by the terminal in each of a first frequency range and a second frequency range. For example, the terminal capability information is configured to indicate that a maximum number of measurement gaps supported under FR1 is X1, and a maximum number of measurement gaps supported under FR2 is X2. X1 and X2 can be the same or different, and the present disclosure is not limited to this.

In the above embodiment, the base station may determine the maximum number of measurement gaps supported by the terminal based on the terminal capability information reported by the terminal, which may subsequently configure the measurement gap configuration information for the terminal more flexibly, and improve a flexibility of network configuration.

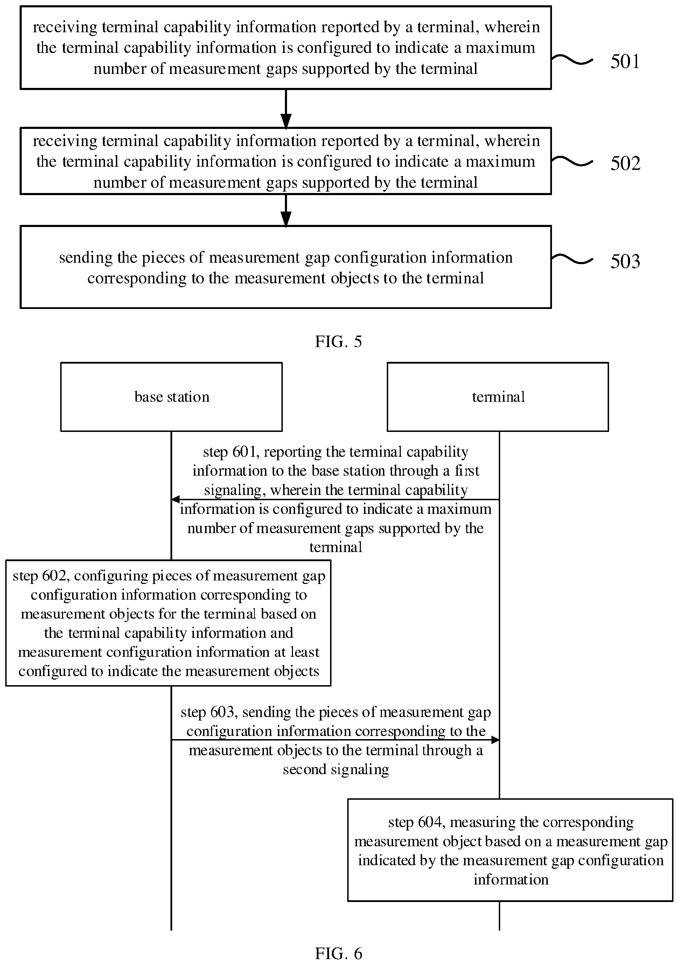

A method for reporting a terminal capability is provided in an embodiment of the present disclosure. Referring to FIG. 5, FIG. 5 is a flowchart illustrating a method for reporting a terminal capability according to an embodiment. The method may be performed by a base station. The method may include the following steps.

At step 501, terminal capability information reported by a terminal is received. The terminal capability information is configured to indicate a maximum number of measurement gaps supported by the terminal.

In a possible implementation, the terminal capability information is configured to indicate a maximum number of measurement gaps supported by the terminal at a same frequency. In another possible implementation, the terminal capability information is configured to indicate a maximum number of measurement gaps supported by the terminal in each of a first frequency range and a second frequency range.

At step 502, pieces of measurement gap configuration information corresponding to measurement objects are configured for the terminal based on the terminal capability information and measurement configuration information at least configured to indicate the measurement objects.

In a possible implementation, the base station may configure one of the pieces of corresponding measurement gap configuration information for each of the measurement objects in response to determining that the maximum number of measurement gaps is greater than or equal to a total number of the measurement objects indicated by the measurement configuration information.

For example, the terminal capability information indicates that the maximum number of measurement gaps supported by the terminal at the same FR is 3, and a total number of measurement objects indicated by the measurement configuration information is 2, which are a measurement object 1 and a measurement object 2, respectively, then the base station may configure for the measurement object 1 one piece of corresponding measurement gap configuration information which indicates a measurement gap of gap1, and further configure for the measurement object 2 one piece of corresponding measurement gap configuration information which indicates a measurement gap of gap2. The gap1 and gap2 are the same or different. The present disclosure is not limited to this.

The terminal supports 3 measurement gaps at the same FR at most, therefore, the terminal has a capability to measure the measurement object 1 and the measurement object 2 based on the gap 1 and the gap 2, respectively, which may avoid using the same measurement gap for different measurement objects at the same FR, resulting in a long measurement delay and affecting a performance of a mobility measurement or a positioning measurement.

In another possible implementation, the base station may determine first measurement objects with a high priority level and second measurement objects with a low priority level in the measurement objects indicated by the measurement configuration information in response to determining that the maximum number of measurement gaps is less than the total number of the measurement objects indicated by the measurement configuration information. The base station may determine the first measurement objects and the second measurement object according to service demands. The present disclosure is not limited to this.

Further, the base station may configure one of the pieces of measurement gap configuration information for each of the first measurement objects, and configure one of the pieces of measurement gap configuration information shared by all second measurement objects.

For example, the terminal capability information indicates that the maximum number of measurement gaps supported by the terminal at each of FR1 and FR2 is 2, and the total number of measurement objects indicated by the measurement configuration information is 3, namely a measurement object 1, a measurement object 2, and a measurement object 3, then the base station may determine a first measurement object with a high priority level, assuming a measurement object 2, from the above three measurement objects, and other two measurement objects are the second measurement object with a low priority level.

The base station configures one piece of separate measurement gap configuration information, which indicates a measurement gap of gap1, for the measurement object 2, and configures one shared measurement gap configuration information, which indicate a measurement gap of gap2, for the measurement object 1 and the measurement object 3.

The terminal may subsequently perform a measurement on the measurement object 2 based on the gap 1, and perform a measurement on the measurement object 1 based on the gap 2, and perform a measurement on the measurement object 3 based on the gap 2.

The above is only for illustrative purposes. Other solutions where the base station configures the corresponding measurement gap configuration information for the terminal based on the supported maximum number of measurement gaps reported by the terminal, as well as the measurement configuration information fall within the scope of protection of the present disclosure.

At step 503, the pieces of measurement gap configuration information corresponding to the measurement objects are sent to the terminal.

In a possible implementation, the base station may send the pieces of measurement gap configuration information corresponding to the measurement objects to the terminal through a second signaling. Optionally, the second signaling may adopt, but is not limited to, a RRC signaling, which may specifically be an IEMeasConfig signaling.

In the above embodiment, the base station may configure the corresponding measurement gap configuration information for the terminal based on the terminal capability information reported by the terminal and the measurement configuration information, which may achieve purposes of reporting the supported maximum number of measurement gaps by the terminal and further improving a flexibility of network configuration. Subsequently, the terminal can perform a mobility measurement or a positioning measurement on different measurement objects based on the measurement gaps configured at the network side, reducing a delay of the mobility measurement or the positioning measurement, and improving a performance of the mobility measurement or the positioning measurement.

In some optional embodiments, the base station determines first measurement objects with a high priority level from the measurement objects, the base station may configure the second signaling including the first measurement object configuration information, and the first measurement object is a measurement object with a higher priority level than the second measurement object. The terminal side may determine the first measurement objects with the high priority level and the second measurement objects with the low priority level based on the first measurement object configuration information included in the second signaling.

In the above embodiment, the second signaling sent by the base station may include the first measurement object configuration information, to enable the terminal to determine the first measurement objects with the high priority level and the second measurement objects with the low priority level. Subsequently, the terminal may measure the measurement objects based on the measurement gaps indicated by the corresponding measurement interval configuration information configured by the base station, reducing a delay of a mobility measurement or a positioning measurement, improving a performance of the mobility measurement or the positioning measurement.

In some optional embodiments, the measurement objects include, but are not limited to, at least one of: different measurement objects corresponding to a same RAT; measurement objects corresponding to different RATs; measurement objects based on synchronization signal blocks or channel state information reference signals; and/or measurement objects based on positioning reference signals.

A method for reporting a terminal capability is provided in an embodiment of the present disclosure. Referring to FIG. 6, FIG. 6 is a flowchart illustrating a method for reporting a terminal capability according to an embodiment. The method may be performed by a base station. The method may include the following steps.

At step 601, a terminal may report terminal capability information to the base station through a first signaling. The terminal capability information is configured to indicate a maximum number of measurement gaps supported by the terminal.

The first signaling is a signaling for reporting a terminal mobility measurement parameter. The terminal capability information is configured to indicate a maximum number of measurement gaps supported by the terminal at a same frequency. Or, the terminal capability information is configured to indicate a maximum number of measurement gaps supported by the terminal in each of a first frequency range and a second frequency range.

At step 602, pieces of measurement gap configuration information corresponding to measurement objects are configured for the terminal based on the terminal capability information and measurement configuration information at least configured to indicate the measurement objects.

The specific configuration process is the same as the above process of the step 502, which will not be repeated here.

At step 603, the base station sends pieces of measurement gap configuration information corresponding to the measurement objects to the terminal through a second signaling. s

Optionally, the second signaling includes first measurement object configuration information, and the first measurement object is a measurement object with a higher priority level than the second measurement object.

At step 604, the terminal measures the corresponding measurement object based on a measurement gap indicated by the measurement gap configuration information.

The specific configuration process is the same as the above process of the step 303, which will not be repeated here.

In the above embodiment, the method may achieve purposes of reporting the supported maximum number of measurement gaps by the terminal and further improving a flexibility of network configuration. Subsequently, the terminal can perform a mobility measurement or a positioning measurement on different measurement objects based on the measurement gaps configured at the network side, reducing a delay of the mobility measurement or the positioning measurement, and improving a performance of the mobility measurement or the positioning measurement.

Corresponding to embodiments of the aforementioned application function implementation method, the present disclosure also provides embodiments of the aforementioned application function implementation apparatus.

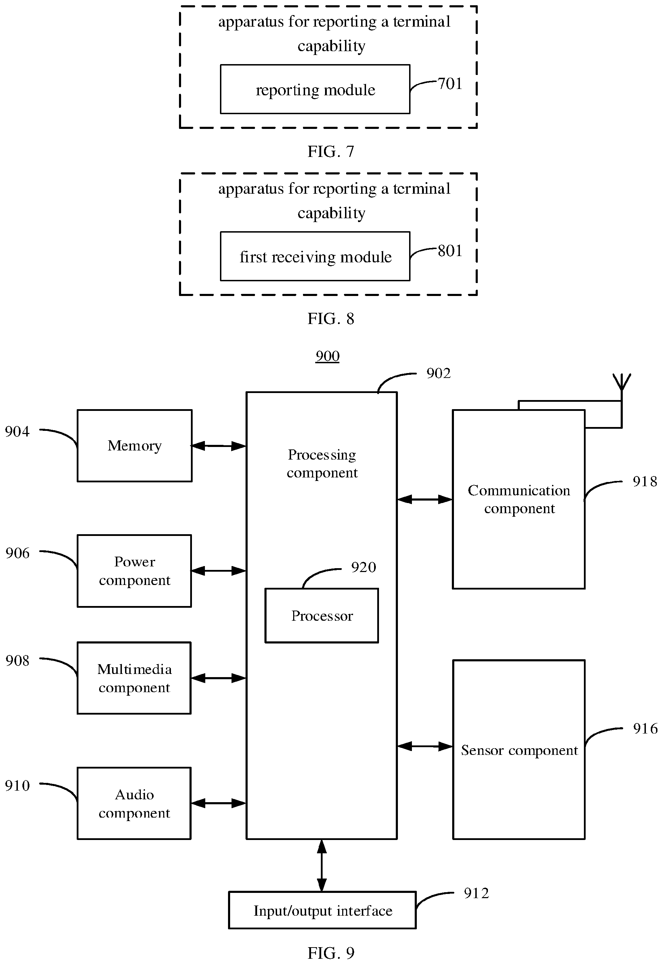

Referring to FIG. 7, FIG. 7 is a block diagram illustrating an apparatus for reporting a terminal capability according to an exemplary embodiment. The apparatus is performed by a terminal. The apparatus includes:
a reporting module 701, configured to report terminal capability information to a base station, in which, the terminal capability information is configured to indicate a maximum number of measurement gaps supported by the terminal.

In some optional embodiments, the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

In some optional embodiments, the reporting module is configured to:
report the terminal capability information to the base station through a first signaling, in which, the first signaling is a signaling for reporting a terminal mobility measurement parameter.

In some optional embodiments, the first signaling is at least one of:
a measurement and mobility parameter information unit signaling; or
a measurement and mobility parameter information unit of multi-radio access technology (RAT) dual connectivity signaling.

In some optional embodiments, the apparatus further includes:
a second receiving module, configured to receive pieces of measurement gap configuration information corresponding to measurement objects sent by the base station; and
a measuring module, configured to measure the corresponding measurement object based on a measurement gap indicated by the measurement gap configuration information.

In some optional embodiments, the second receiving module is further configured to:
receive one of the pieces of corresponding measurement gap configuration information configured by the base station for each of the measurement objects;
the measuring module is further configured to:
   measure the corresponding measurement object based on the measurement gap indicated by each of the pieces of measurement gap configuration information.

In some optional embodiments, the second receiving module is further configured to:
receive one of the pieces of corresponding measurement gap configuration information configured by the base station for each of first measurement objects, and one piece of shared measurement gap configuration information configured for all second measurement objects, in which, a priority level of the first measurement objects is higher than a priority level of the second measurement obj ects;
the measuring module is further configured to:
   measure each of corresponding first measurement objects based on a measurement gap indicated by the measurement gap configuration information corresponding to each of the first measurement objects; and
   measure each of second measurement object based on a measurement gap indicated by the measurement gap configuration information shared by all second measurement objects.

In some optional embodiments, the second receiving module is configured to:
receive pieces of measurement gap configuration information corresponding to the measurement objects sent by the base station through a second signaling;
the apparatus further includes:
   a processing module, configured to determine the first measurement objects with a priority level higher than the second measurement objects based on first measurement object configuration information comprised in the second signaling.

In some optional embodiments, the measurement objects include at least one of:
different measurement objects corresponding to a same RAT;
measurement objects corresponding to different RATs;
measurement objects based on synchronization signal blocks or channel state information reference signals; and/or
measurement objects based on positioning reference signals.

Referring to FIG. 8, FIG. 8 is a block diagram illustrating an apparatus for reporting a terminal capability according to an exemplary embodiment. The apparatus is performed by a base station. The apparatus includes:
a first receiving module 801, configured to receive terminal capability information reported by a terminal, in which, the terminal capability information is configured to indicate a maximum number of measurement gaps supported by the terminal.

In some optional embodiments, the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

In some optional embodiments, the apparatus further includes:
a second processing module, configured to configure pieces of measurement gap configuration information corresponding to measurement objects for the terminal based on the terminal capability information and measurement configuration information at least configured to indicate the measurement objects; and
a sending module, configured to send the pieces of measurement gap configuration information corresponding to the measurement objects to the terminal.

In some optional embodiments, the second processing module is further configured to:
configure one of the pieces of corresponding measurement gap configuration information for each of the measurement objects in response to determining that the maximum number of measurement gaps is greater than or equal to a total number of the measurement objects indicated by the measurement configuration information.

In some optional embodiments, the second processing module is further configured to:
determine first measurement objects and second measurement objects in the measurement objects indicated by the measurement configuration information in response to determining that the maximum number of measurement gaps is less than the total number of the measurement objects indicated by the measurement configuration information, in which, a priority level of the first measurement objects is higher than a priority level of the second measurement objects; and
configure one of the pieces of measurement gap configuration information corresponding to each of the first measurement objects, and configuring one of the pieces of measurement gap configuration information shared by all second measurement objects.

In some optional embodiments, the sending module is further configured to:
send the pieces of measurement gap configuration information corresponding to the measurement objects to the terminal through a second signaling.

In some optional embodiments, the second signaling comprises first measurement object configuration information, and the first measurement objects are measurement objects with a priority level higher than the second measurement objects.

In some optional embodiments, the second signaling is a measurement configuration information unit signaling.

In some optional embodiments, the measurement objects include at least one of:
different measurement objects corresponding to a same RAT;
measurement objects corresponding to different RATs;
measurement objects based on synchronization signal blocks or channel state information reference signals; and/or
measurement objects based on positioning reference signals.

The apparatus embodiments basically correspond to the method embodiments, and the related contents can refer to part of the descriptions of the method embodiments. The above-described apparatus embodiments are merely schematic, the modules described above as separate components may or may not be physically separated, and the components displayed as modules may or may not be physical modules, i.e., the components may be located in one area or may be distributed to multiple network modules. Some or all of these modules can be selected according to practical needs to achieve the purpose of the solution of the disclosure. Those skilled in the art can understand and implement the solution without inventive works.

Correspondingly, the present disclosure provides a computer-readable storage medium having a computer program stored thereon. The computer program is configured to perform any one of the method for reporting the terminal capability as described above at the terminal side.

Correspondingly, the present disclosure provides a computer-readable storage medium having a computer program stored thereon. The computer program is configured to perform any one of the method for reporting the terminal capability as described above at the base station side.

Correspondingly, the present disclosure also provides an apparatus for reporting a terminal capability. The apparatus includes:
a processor; and
a memory, configured to store instructions executable by the processor;
in which, the processor is configured to perform any one of the method as described above at the terminal side.

FIG. 9 is a schematic diagram illustrating a structure of an apparatus 900 for reporting a terminal capability according to an exemplary embodiment of the present disclosure. For example, the apparatus 900 may be a mobile phone, a tablet, an e-book reader, a multimedia playback device, a wearable device, an on-board user equipment, an iPad, a smart TV, and other terminals.

As illustrated in FIG. 9, the apparatus 900 may include one or more components: a processing component 902, a memory 904, a power supply component 906, a multimedia component 908, an audio component 910, an input/output (I/O) interface 912, a sensor component 916, and a communication component 1018.

The processing component 902 generally controls the whole operation of the apparatus 900, such as operations related to display, phone call, data communication, camera operation and recording operation. The processing component 902 may include one or more processors 920 to perform instructions, to complete all or part of steps of the above method. In addition, the processing component 902 may include one or more modules for the convenience of interaction between the processing component 902 and other components. For example, the processing component 902 may include a multimedia module for the convenience of interaction between the multimedia component 908 and the processing component 902. For example, the processing component 902 can read executable instructions from the memory to implement the steps of the method for reporting the terminal capability provided in the above embodiments.

The memory 904 is configured to store all types of data to support the operation of the apparatus 900. Examples of the data include the instructions of any applications or methods operated on the apparatus 900, contact data, phone book data, messages, pictures, videos, etc. The memory 904 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 may provide power supply for all components of the apparatus 900. The power supply component 906 may include a power supply management system, one or more power supplies, and other units related to generating, managing and distributing power for the apparatus 900.

The multimedia component 908 includes an output interface screen provided between the apparatus 900 and the user. In some embodiments, the multimedia component 308 includes a front camera and/or a rear camera. When the apparatus 900 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 910 is configured as an output and/or input signal. For example, the audio component 910 includes a microphone (MIC). When the apparatus 900 is in operation mode, such as call mode, record mode, and speech recognition mode, the microphone is configured to receive external audio signals. The audio signals received may be further stored in the memory 904 or sent via the communication component 916. In some embodiments, the audio component 910 further includes a speaker configured to output an audio signal.

The I/O interface 912 provides an interface for the processing component 902 and the peripheral interface module, and the peripheral interface module may be a keyboard, a click wheel, a button, etc. The buttons may include but not limited to a home button, a volume button, a start button and a lock button.

The sensor component 916 includes one or more sensors, configured to provide various aspects of status assessment for the apparatus 900. For example, the sensor component 916 may detect the on/off state of the apparatus 900 and the relative positioning of the component. For example, the component is a display and a keypad of the apparatus 900. The sensor component 916 may further detect the location change of the apparatus 900 or one component of the apparatus 900, the presence or absence of contact between the user and the apparatus 900, the orientation or acceleration/deceleration of the apparatus 900, and the temperature change of the apparatus 900. The sensor component 916 may include a proximity sensor, which is configured to detect the existence of the objects nearby without any physical contact. The sensor component 916 may further include a light sensor such as CMOS or CCD image sensor, which is configured to use in imaging applications. In some embodiments, the sensor component 916 may further include an acceleration transducer, a gyroscope sensor, a magnetic sensor, a pressure sensor or a temperature sensor.

The communication component 1018 is configured for the convenience of wire or wireless communication between the apparatus 900 and other devices. The apparatus 900 may access wireless networks based on a communication standard, such as Wi-Fi, 2G or 3G, or their combination. In an exemplary embodiment, the communication component 1018 receives broadcast signals or broadcast-related information from an external broadcast management system via a broadcast channel. In an exemplary embodiment, the communication component 1018 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the apparatus 900 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform any one of the method for reporting the terminal capability as described above at the terminal side.

In an exemplary embodiment, a non-transitory computer readable storage medium is further provided which includes instructions, such as the memory 904 including instructions. The instructions may be executed by the processor 920 of the apparatus 900 to complete the above method for reporting the terminal capability. For example, the non-transitory computer-readable storage medium may be a ROM, a random-access memory (RAM), a CD-ROM, a magnetic tape, a floppy disk, an optical data storage device, etc.

Correspondingly, the present disclosure also provides an apparatus for reporting a terminal capability. The apparatus includes:
a processor; and
a memory, configured to store instructions executable by the processor;
in which, the processor is configured to perform any one of the method as described above at the base station side.

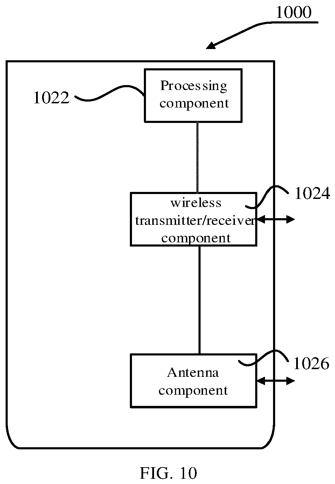

As illustrated in FIG. 10, FIG. 10 is a schematic diagram illustrating a structure of an apparatus 1000 according to an exemplary embodiment of the present disclosure. The apparatus 1000 can be provided as a base station. Referring to FIG. 10, the apparatus 1000 includes a processing component 1022, a wireless transmission/reception component 1024, an antenna component 1026, and a signal processing portion unique to the wireless interface. The processing component 1022 may further include at least one processor.

One of the processors in processing component 1022 may be configured to execute any one of the methods as described above.

After considering the specification and practicing the disclosure here, those skilled in the art will easily think of other implementations. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

## Claims

1. A method for reporting a terminal capability, performed by a terminal, comprising:
reporting terminal capability information to a base station, wherein the terminal capability information is configured to indicate a maximum number of measurement gaps supported by the terminal.

2. The method according to claim 1, wherein the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

3. The method according to claim 1, wherein reporting the terminal capability information to the base station comprises:
reporting the terminal capability information to the base station through a first signaling, wherein the first signaling is a signaling for reporting a terminal mobility measurement parameter.

4. The method according to claim 3, wherein the first signaling is at least one of:
a measurement and mobility parameter information unit signaling; or
a measurement and mobility parameter information unit of multi-radio access technology (RAT) dual connectivity signaling.

5. The method according to claim 1, wherein, after reporting the terminal capability information to the base station, the method further comprises:
receiving pieces of measurement gap configuration information corresponding to measurement objects sent by the base station; and
measuring the corresponding measurement object based on a measurement gap indicated by the measurement gap configuration information.

6. The method according to claim 5, wherein receiving the pieces of measurement gap configuration information corresponding to the measurement objects sent by the base station comprises:
receiving one of the pieces of corresponding measurement gap configuration information configured by the base station for each of the measurement objects;
measuring the corresponding measurement object based on the measurement gap indicated by the measurement gap configuration information comprises:
measuring the corresponding measurement object based on the measurement gap indicated by each of the pieces of measurement gap configuration information.

7. The method according to claim 5, wherein receiving the pieces of measurement gap configuration information corresponding to the measurement objects sent by the base station comprises:
receiving one of the pieces of corresponding measurement gap configuration information configured by the base station for each of first measurement objects, and one piece of shared measurement gap configuration information configured for all second measurement objects, wherein a priority level of the first measurement objects is higher than a priority level of the second measurement objects;
measuring the corresponding measurement object based on the measurement gap indicated by the measurement gap configuration information comprises:
measuring each of corresponding first measurement objects based on a measurement gap indicated by the measurement gap configuration information corresponding to each of the first measurement objects; and
measuring each of second measurement object based on a measurement gap indicated by the measurement gap configuration information shared by all second measurement objects.

8. The method according to claim 7, wherein receiving the pieces of measurement gap configuration information corresponding to the measurement objects sent by the base station comprises:
receiving pieces of measurement gap configuration information corresponding to the measurement objects sent by the base station through a second signaling;
the method further comprises:
determining the first measurement objects with a priority level higher than the second measurement objects based on first measurement object configuration information comprised in the second signaling.

9. The method according to any one of claims 5 to 8, wherein the measurement objects comprise at least one of:
different measurement objects corresponding to a same RAT;
measurement objects corresponding to different RATs;
measurement objects based on synchronization signal blocks or channel state information reference signals; and/or
measurement objects based on positioning reference signals.

10. A method for reporting a terminal capability, performed by a base station, comprising:
receiving terminal capability information reported by a terminal, wherein the terminal capability information is configured to indicate a maximum number of measurement gaps supported by the terminal.

11. The method according to claim 10, wherein the terminal capability information is configured to indicate a maximum number of measurement gaps supported by the terminal at a same frequency; or
the terminal capability information is configured to indicate a maximum number of measurement gaps supported by the terminal in each of a first frequency range and a second frequency range.

12. The method according to claim 10, further comprising:
configuring pieces of measurement gap configuration information corresponding to measurement objects for the terminal based on the terminal capability information and measurement configuration information at least configured to indicate the measurement objects; and
sending the pieces of measurement gap configuration information corresponding to the measurement objects to the terminal.

13. The method according to claim 12, wherein configuring the pieces of measurement gap configuration information corresponding to the measurement objects for the terminal based on the terminal capability information and the measurement configuration information at least configured to indicate the measurement objects comprises:
configuring one of the pieces of corresponding measurement gap configuration information for each of the measurement objects in response to determining that the maximum number of measurement gaps is greater than or equal to a total number of the measurement objects indicated by the measurement configuration information.

14. The method according to claim 12, wherein configuring the pieces of measurement gap configuration information corresponding to the measurement objects for the terminal based on the terminal capability information and the measurement configuration information at least configured to indicate the measurement objects comprises:
determining first measurement objects and second measurement objects in the measurement objects indicated by the measurement configuration information in response to determining that the maximum number of measurement gaps is less than the total number of the measurement objects indicated by the measurement configuration information, wherein a priority level of the first measurement objects is higher than a priority level of the second measurement objects; and
configuring one of the pieces of measurement gap configuration information corresponding to each of the first measurement objects, and configuring one of the pieces of measurement gap configuration information shared by all second measurement objects.

15. The method according to any one of claims 12 to 14, wherein sending the pieces of measurement gap configuration information corresponding to the measurement objects to the terminal comprises:
sending the pieces of measurement gap configuration information corresponding to the measurement objects to the terminal through a second signaling.

16. The method according to claim 15, wherein the second signaling comprises first measurement object configuration information, and the first measurement objects are measurement objects with a priority level higher than the second measurement objects.

17. The method according to claim 15, wherein the second signaling is a measurement configuration information unit signaling.

18. The method according to any one of claims 12 to 14, wherein the measurement objects comprise at least one of:
different measurement objects corresponding to a same RAT;
measurement objects corresponding to different RATs;
measurement objects based on synchronization signal blocks or channel state information reference signals; and/or
measurement objects based on positioning reference signals.

19. An apparatus for reporting a terminal capability, performed by a terminal, comprising:
a reporting module, configured to report terminal capability information to a base station, wherein the terminal capability information is configured to indicate a maximum number of measurement gaps supported by the terminal.

20. An apparatus for reporting a terminal capability, performed by a base station, comprising:
a first receiving module, configured to receive terminal capability information reported by a terminal, wherein the terminal capability information is configured to indicate a maximum number of measurement gaps supported by the terminal.

21. A computer-readable storage medium having a computer program stored thereon, wherein the computer program is configured to perform the method for reporting the terminal capability according to any one of claims 1 to 9.

22. A computer-readable storage medium having a computer program stored thereon, wherein the computer program is configured to perform the method for reporting the terminal capability according to any one of claims 10 to 18.

23. An apparatus for reporting a terminal capability, comprising:
a processor; and
a memory, configured to store instructions executable by the processor;
wherein, the processor is configured to perform the method for reporting the terminal capability according to any one of claims 1 to 9.

24. An apparatus for reporting a terminal capability, comprising:
a processor; and
a memory, configured to store instructions executable by the processor;
wherein, the processor is configured to perform the method for reporting the terminal capability according to any one of claims 10 to 18.
